(19) Europäisches Patentamt
European Patent Office
Office européen des brevets

(11) EP 4 154 959 A1

(12) # EUROPEAN PATENT APPLICATION
published in accordance with Art. 153(4) EPC

(43) Date of publication:
**29.03.2023 Bulletin 2023/13**

(21) Application number: **21808343.4**

(22) Date of filing: **22.04.2021**

(51) International Patent Classification (IPC):
***B01D 15/00*** *(2006.01)* ***B01D 15/02*** *(2006.01)*
***B01J 20/26*** *(2006.01)*

(52) Cooperative Patent Classification (CPC):
**B01D 15/00; B01D 15/02; B01J 20/26;** Y02P 10/20

(86) International application number:
**PCT/JP2021/016239**

(87) International publication number:
**WO 2021/235161 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2020 JP 2020089863**

(71) Applicant: **DIC Corporation**
**Tokyo 174-8520 (JP)**

(72) Inventors:
- **IBARAKI Taku**
**Ichihara-shi, Chiba 290-8585 (JP)**
- **WATANABE Hideki**
**Ichihara-shi, Chiba 290-8585 (JP)**
- **FURUSAWA Takashi**
**Ichihara-shi, Chiba 290-8585 (JP)**

(74) Representative: **Gerauer, Marc Philippé**
**Kraus & Weisert**
**Patentanwälte PartGmbB**
**Thomas-Wimmer-Ring 15**
**80539 München (DE)**

(54) **ADSORBENT, SEPARATION METHOD, AND PRODUCTION METHOD FOR LIQUID**

(57) Provided are an adsorbent which can be used in water, particularly even under strong acid conditions, and which has excellent adsorptivity, a method for efficiently separating a separation object substance from a liquid containing the separation object substance using the adsorbent, and further a method for producing a liquid having a separation object substance reduced. More specifically, provided are a method for separating a separation object substance and a liquid using polyarylene sulfide resin particles as an adsorbent from the liquid containing the separation object substance, wherein the liquid contains water, and further a method for producing a liquid having a separation object substance reduced, comprising efficiently separating a separation object substance from a liquid containing the separation object substance using an adsorbent which can be used in water, particularly even under strong acid conditions, and which has excellent adsorptivity.

EP 4 154 959 A1

## Description

TECHNICAL FIELD

The present invention relates to a method for separating a separation object substance and a liquid using polyarylene sulfide (hereinafter, frequently referred to simply as "PAS") resin particles as an adsorbent from the liquid containing the separation object substance using particles composed of a polyarylene sulfide resin (hereinafter, frequently referred to simply as "polyarylene sulfide resin particles" or "PAS resin particles"). More particularly, the present invention is concerned with a method for separating a metal atom or a protic organic solvent and water using PAS resin particles as an adsorbent from water or a liquid containing water (hereinafter, frequently referred to simply as "aqueous solution"), which contains the metal atom, a compound containing the metal atom, or the protic organic solvent. Further, the present invention is concerned with a method for producing a liquid having a separation object substance reduced, comprising separating a separation object substance from a liquid containing the separation object substance, and an adsorbent using particles substantially composed of a polyarylene sulfide resin.

BACKGROUND ART

In recent years, for example, in view of both the effective utilization of valuable resources and prevention of environmental pollution, efficient separation of metal atoms which are valuable resources from water containing the metal atoms has attracted attention. However, such separation is generally conducted under strong acid conditions for dissolving metal atoms in water, and there has been desired an adsorbent which can be used even at a wide range of pH and can be easily reused, and which has excellent adsorptivity. Among valuable metals, noble metals called rare metals, such as gold, platinum, and palladium, are very rare and valuable, and particularly, an excellent adsorbent which can selectively recover rare metals has been desired. Further, in view of the prevention of environmental pollution, for improving the removal rate of TOC in waste water, efficient separation of a protic organic solvent from waste water also has drawn attention.

On the other hand, utilizing properties of a polyarylene sulfide resin, such as excellent heat resistance and excellent chemical resistance, the use of a porous material composed of the polyarylene sulfide resin as an adsorbent has been proposed. For example, in a system such that when a PAS resin, a polymer other than the PAS resin, and an organic solvent are mixed and dissolved, phase separation occurs into two phases, i.e., a PAS resin solution phase and a phase of a solution of the polymer other than the PAS resin, a method has been known in which an emulsion having the PAS resin solution phase which constitutes a disperse phase and the other polymer solution phase which constitutes a continuous phase is formed, and then a poor solvent for the PAS resin is contacted with the emulsion to cause deposition of PAS fine particles (see PTL 1). However, organic materials other than the PAS resin derived from the method as impurities are deposited on or contained in the fine particles, and it is difficult to remove the impurities. For this reason, according to the studies made by the present inventors, when permitting the fine particles to adsorb the metal atoms or alcohol contained in water, the particles cannot exhibit satisfactory adsorptive effect due to the effects of impurities deposited on the surface of the particles, and further, when using the fine particles as an adsorbent, it is likely that the impurities deposited on the surface of the particles or contained in the particles are dissolved out of the particles to cause secondary pollution, and such pollution is particularly noticeable in the use of the particles under severe conditions, especially under acid or alkaline conditions, conditions containing an organic solvent, or the like.

Meanwhile, polyphenylene sulfide fine particles have been proposed wherein the polyphenylene sulfide fine particles have adsorbed on the surface thereof a cationic polymer dispersant in an amount of 0.1 to 30 parts by mass, relative to 100 parts by mass of the polyphenylene sulfide fine particles, and the polyphenylene sulfide fine particles have a volatile component content of less than 50% by mass (see PTL 2). However, the proposed fine particles have an average primary particle diameter as small as about 0.05 to 1 μm, and further polyphenylene sulfide itself is hydrophobic, and therefore, in order to prevent aggregation of the fine particles in water, there is a need to deposit a dispersant (surfactant) on the surface of the fine particles. Moreover, with respect to the proposed fine particles, there is no disclosure about a technical concept concerning the use of the particles as an adsorbent in a liquid, such as a solvent, and only the use of the particles as a gas adsorbent, i.e., the use as an adsorbent in a gas is proposed. Further, when using the fine particles as an adsorbent in an aqueous solution, it is likely that the dispersant deposited on the surface of the particles is dissolved out of the particles to cause secondary pollution, and such pollution is particularly noticeable in the use of the particles under severe conditions, especially under acid or alkaline conditions, conditions containing an organic solvent, or the like.

CITATION LIST

PATENT LITERATURE

PTL 1: JPH10-273594A

PTL2: JP2017-61607A

SUMMARY OF INVENTION

TECHNICAL PROBLEM

Accordingly, a task to be achieved by the present invention is to provide a method for efficiently separating a separation object substance from a liquid containing the separation object substance using an adsorbent which can be used in water, particularly even under strong acid conditions, and which has excellent adsorptivity. Another task to be achieved by the invention is to provide a method for producing a liquid having a separation object substance reduced, comprising efficiently separating a separation object substance from a liquid containing the separation object substance using an adsorbent which can be used in water, particularly even under strong acid conditions, and which has excellent adsorptivity.

Further, still another task to be achieved by the invention is to provide an adsorbent which can be used in water, particularly even under strong acid conditions, and which has so excellent adsorptivity that a separation object substance can be efficiently separated from a liquid containing the separation object substance.

SOLUTION TO PROBLEM

The present inventors have conducted extensive and intensive studies. As a result, the following invention has been completed.

Specifically, the present invention is directed to a method for separating a separation object substance and a liquid using an adsorbent from the liquid containing the separation object substance,

the method comprising the step of contacting a liquid containing a separation object substance and an adsorbent with each other to permit the adsorbent to selectively adsorb the separation object substance contained in the liquid, removing the separation object substance from the liquid,
wherein the adsorbent is polyarylene sulfide resin particles, and
wherein the liquid contains water.

Further, the present invention is directed to a method for producing a liquid, having the step of separating a separation object substance and a liquid using an adsorbent from the liquid containing the separation object substance, producing a liquid having the separation object substance reduced,

wherein the method comprises the step of contacting a liquid containing a separation object substance and an adsorbent with each other to permit the adsorbent to selectively adsorb the separation object substance contained in the liquid, removing the separation object substance from the liquid,
wherein the adsorbent is polyarylene sulfide resin particles, and
wherein the liquid contains water.

Further, the present invention is directed to an adsorbent which is for use in adsorbing a separation object substance from a liquid containing the separation object substance,
wherein the adsorbent comprises polyarylene sulfide resin particles and water in the absence of a surfactant.

ADVANTAGEOUS EFFECTS OF INVENTION

In the present invention, there can be provided a method for efficiently separating a separation object substance from a liquid containing the separation object substance using an adsorbent which can be used in water, particularly even under strong acid conditions, and which has excellent adsorptivity. Further, in the invention, there can be provided a method for producing a liquid having a separation object substance reduced, comprising efficiently separating a

separation object substance from a liquid containing the separation object substance using an adsorbent which can be used in water, particularly even under strong acid conditions, and which has excellent adsorptivity. Furthermore, in the invention, there can be provided an adsorbent which can be used in water, particularly even under strong acid conditions, and which has so excellent adsorptivity that a separation object substance can be efficiently separated from a liquid containing the separation object substance.

DESCRIPTION OF EMBODIMENTS

The separation method of the present invention is a method for separating a separation object substance and a liquid using an adsorbent from the liquid containing the separation object substance,

the method comprising the step of contacting a liquid containing a separation object substance and an adsorbent with each other to permit the adsorbent to selectively adsorb the separation object substance contained in the liquid, removing the separation object substance from the liquid,
wherein the adsorbent is polyarylene sulfide resin particles, and
wherein the liquid contains water.

Further, the production method of the invention is a method for producing a liquid, having the step of separating a separation object substance and a liquid using an adsorbent from the liquid containing the separation object substance, producing a liquid having the separation object substance reduced,

wherein the method comprises the step of contacting a liquid containing a separation object substance and an adsorbent with each other to permit the adsorbent to selectively adsorb the separation object substance contained in the liquid, removing the separation object substance from the liquid,
wherein the adsorbent is polyarylene sulfide resin particles, and
wherein the liquid contains water.

In the invention, with respect to the separation object substance, there can be mentioned a metal atom and a compound containing a metal atom (wherein a sodium atom and a lithium atom are excluded as the metal atom). Examples of the metal atoms include at least one member selected from the group consisting of an alkali metal atom, an alkaline earth metal atom, a transition metal atom, a lanthanoid atom, and an actinoid atom, and these metal atoms may be individually present, or the metal atom or atoms and another atom may be bonded to be present in the form of a compound or an alloy. Of these, preferred is a transition metal, and further preferred is a metal atom which is classified into a soft metal according to the HSAB principle. The reason for this is presumed that the polyarylene sulfide resin which is the adsorbent contains a sulfur atom, which is classified into a soft atom according to the HSAB principle, as a main component. The metal atom and the below-mentioned acid or base may undergo a reaction to form a salt.

Examples of alkali metal atoms include potassium, rubidium, cesium, and francium. Further, examples of alkaline earth metal atoms include calcium, strontium, barium, and radium. Further, examples of transition metal atoms include scandium, titanium, vanadium, chromium, manganese, iron, cobalt, nickel, copper, yttrium, zirconium, niobium, molybdenum, technetium, ruthenium, rhodium, palladium, silver, cadmium, lanthanoid, hafnium, tantalum, tungsten, rhenium, osmium, iridium, platinum, gold, and mercury. Examples of lanthanoids include lanthanum, cerium, praseodymium, neodymium, promethium, samarium, europium, gadolinium, terbium, dysprosium, holmium, erbium, thulium, ytterbium, and lutetium. Further, examples of actinoids include actinium, thorium, protactinium, uranium, neptunium, plutonium, americium, curium, berkelium, californium, einsteinium, fermium, mendelevium, nobelium, and lawrencium. Further, examples of base metal atoms include aluminum, zinc, gallium, germanium, indium, tin, antimony, mercury, thallium, lead, bismuth, and polonium. Of these, due to excellent adsorptivity, further preferred examples include metal atoms which are classified into soft metals according to the HSAB principle, specifically, copper, molybdenum, cadmium, gold, platinum, and palladium, and, among these, especially preferred examples include gold, platinum, and palladium.

With respect to the separation object substance, there can be mentioned a protic organic solvent. Examples of the protic organic solvents include alcohol solvents, such as methanol, ethanol, n-butanol, n-decanol, isomers thereof, cyclopentanol, and cyclohexanol.

With respect to the liquid, there can be mentioned water. The liquid may contain not only a weak acid, such as acetic acid, formic acid, carbonic acid, oxalic acid, or phosphoric acid, but also further preferably a strong acid, such as hydrochloric acid, sulfuric acid, nitric acid, or aqua regia.

In the separation method of the invention, the liquid containing the separation object substance may have pH of any value, and, for example, under strong acid conditions, by using the adsorbent of the invention, the adsorbent can adsorb the separation object substance from the liquid containing the separation object substance.

The separation method of the invention comprises the step of contacting a liquid containing a separation object

substance and an adsorbent with each other to permit the adsorbent to selectively adsorb the separation object substance contained in the liquid, removing the separation object substance from the liquid. In the step, in contacting a liquid containing a separation object substance and an adsorbent with each other, for example, the adsorbent is added to the liquid containing the separation object substance to permit the adsorbent to selectively adsorb the separation object substance contained in the liquid, so that the separation object substance can be removed from the liquid. In this instance, for suppressing aggregation of the particles of the adsorbent, mechanical shearing force can be applied to the liquid by stirring, vibration, irradiation with ultrasonic waves, or the like.

With respect to the ratio of the adsorbent used to the liquid containing the separation object substance, there is no particular limitation, but the measurement of a concentration of the separation object substance, or the like is conducted in advance, and, when the separation object substance is a metal, the adsorbent can be used so that the amount of the adsorbent is in the range of preferably 1 time or more, more preferably 5 times or more, further preferably 10 times or more, and preferably 1,000 times or less, more preferably 500 times or less, further preferably 100 times or less the separation object substance, in terms of a weight ratio. Further, when the separation object substance is a protic organic solvent, the adsorbent can be used so that the amount of the adsorbent is in the range of from preferably 0.001 time, more preferably 0.005 time, further preferably 0.01 time, to preferably 10 times or less, more preferably 5 times or less, further preferably 1 time or less the separation object substance, in terms of a weight ratio.

Further, the invention may have the solid-liquid separation step for the adsorbent and liquid. Examples of solid-liquid separation include precipitation separation, floatation separation, sand filtration, centrifugal separation, microfiltration, and ultrafiltration. By virtue of this, a regeneration treatment for taking the adsorbent having adsorbed the separation object substance after the solid-liquid separation and removing the adsorbed separation object substance from the adsorbent can be easily made, facilitating reuse of the adsorbent.

Alternatively, in contacting a liquid containing a separation object substance and an adsorbent with each other, for example, the adsorbent is immobilized, and the liquid containing the object substance is fed to the immobilized adsorbent to permit the adsorbent to selectively adsorb the separation object substance contained in the liquid, so that the separation object substance can be removed from the liquid. With respect to the above contacting the liquid and the adsorbent, in the case of treatment conducted in a batch-wise manner, there can be mentioned a method in which the liquid containing the separation object substance is fed to a container having the adsorbent immobilized thereon, and, in the case of treatment conducted in a continuous manner, there can be mentioned a method in which the adsorbent is immobilized on inside of a flow channel, and the liquid containing the separation object substance is fed into the flow channel. In the immobilization, any known method can be used as long as the adsorbent can be separated from the liquid by shutting the adsorbent out using a wall having pores having such a size that the liquid can pass through the pores but the adsorbent cannot pass through the pores. By immobilizing the adsorbent, solid-liquid separation for the adsorbent and the liquid can be easily performed, but there is a possibility that the adsorbent having a smaller particle diameter is mixed into the liquid after the solid-liquid separation, and therefore, when there is a need to avoid this, separately, a solid-liquid separation step, such as precipitation separation, floatation separation, sand filtration, centrifugal separation, microfiltration, or ultrafiltration, can be conducted.

In the invention, polyarylene sulfide resin particles are used as the adsorbent. The term "polyarylene sulfide resin particles" means particles substantially composed of a polyarylene sulfide resin or a polyarylene sulfide resin in the form of particles.

The polyarylene sulfide resin constituting the polyarylene sulfide resin particles used in the invention has a resin structure in which a structure having an aromatic ring and a sulfur atom bonded to each other constitutes repeating units, specifically, the polyarylene sulfide resin is a resin having a structural site represented by the following formula (1):

[Chem. 1]

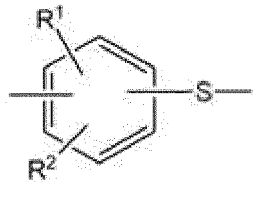

formula (1)

wherein each of $R^1$ and $R^2$ independently represents a hydrogen atom, an alkyl group having 1 to 4 carbon atoms, a nitro group, an amino group, a phenyl group, a methoxy group, or an ethoxy group and a trifunctional structural site represented by the following formula (2):

[Chem. 2]

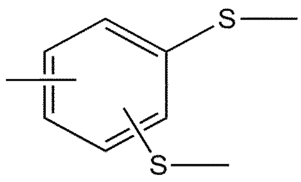

formula (2)

as repeating units. The amount of the trifunctional structural site represented by the formula (2), based on the total mole of the trifunctional structural site and the other structural sites, is preferably 0.001 to 3 mol%, especially preferably 0.01 to 1 mol%.

With respect to the structural site represented by the formula (1) above, particularly, $R^1$ and $R^2$ in the formula are preferably a hydrogen atom in view of the mechanical strength of the polyarylene sulfide resin, and, as examples of the structural site in such a case, there can be mentioned a structural site represented by the following formula (3) in which the sulfur atom is bonded to the aromatic ring at the para-position, a structural site represented by the following formula (4) in which the sulfur atom is bonded to the aromatic ring at the meta-position, and a structural site in which the sulfur atom is bonded to the aromatic ring at the ortho-position.

[Chem. 3]

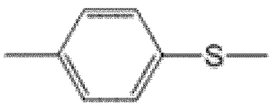

formula (3)

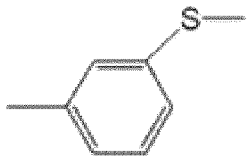

formula (4)

Of these, with respect to the position of bonding of the sulfur atom to the aromatic ring in the repeating units, in view of improving the adsorptivity, the polyarylene sulfide resin having, in addition to the structure represented by the structural formula (3) above in which the sulfur atom is bonded to the aromatic ring at the para-position, the structure represented by the formula (4) above in which the sulfur atom is bonded to the aromatic ring at the meta-position or the structure in which the sulfur atom is bonded to the aromatic ring at the ortho-position in an amount in the range of from 1 to 50 mol% is preferably used, and further the polyarylene sulfide resin having only the structure represented by the structural formula (3) above in which the sulfur atom is bonded to the aromatic ring at the para-position is preferred in view of the heat resistance and crystalline properties of the polyarylene sulfide resin, and from the viewpoint of enabling the use under conditions at a wide range of temperatures and pH.

Further, the polyarylene sulfide resin may contain not only the structural sites represented by the formulae (1) and (2) above but also structural sites represented by the following structural formulae (5) to (8):

[Chem. 4]

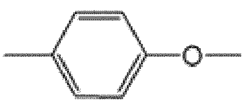

formula (5)

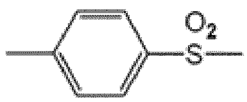

formula (6)

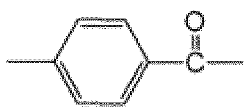

formula (7)

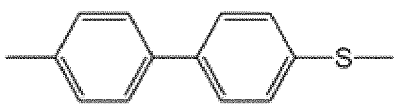

formula (8)

in an amount of 30 mol% or less of the total of the structural sites represented by the formulae (1) and (2) and the structural sites represented by the formulae (5) to (8). Particularly, in the invention, the amount of the structural sites represented by the formulae (5) to (8) above is preferably 10 mol% or less in view of the heat resistance and mechanical strength of the polyarylene sulfide resin. When the polyarylene sulfide resin (a) contains the structural sites represented by the formulae (5) to (8) above, the bonding of these sites may be any of a random copolymer and a block copolymer.

Further, the polyarylene sulfide resin may have in the molecular structure thereof a naphthyl sulfide bond or the like, but the amount of the naphthyl sulfide bond or the like, based on the total mole of the naphthyl sulfide bond or the like and the other structural sites, is preferably 3 mol% or less, especially preferably 1 mol% or less.

The polyarylene sulfide resin particles used in the invention can be produced by, for example, conducting polymerization of a polyarylene sulfide resin and then subjecting the resin to after-treatment. With respect to the polymerization method for the polyarylene sulfide resin, there is no particular limitation as long as it is a known matehood, but there can be mentioned polymerization methods, such as (polymerization method 1) in which a dihalogeno aromatic compound and, if necessary, a polyhalogeno aromatic compound or another copolymerizable component are subjected to polymerization in the presence of sulfur and sodium carbonate, (polymerization method 2) in which a dihalogeno aromatic compound and, if necessary, a polyhalogeno aromatic compound or another copolymerizable component are subjected to polymerization in a polar solvent in the presence of a sulfidating agent or the like, and (polymerization method 3) in which p-chlorothiophenol and, if necessary, another copolymerizable component are subjected to self-condensation. Of these polymerization methods, the (polymerization method 2) is generally used and preferred. In the reaction, for controlling the degree of polymerization, an alkali metal salt of a carboxylic acid or sulfonic acid, or an alkali hydroxide may be added. Particularly preferred is the polyarylene sulfide resin obtained by the (polymerization method 2), especially the method in which a water-containing sulfidating agent is introduced into a heated mixture containing an organic polar solvent and a dihalogeno aromatic compound at such a rate that water can be removed from the reaction mixture, and the dihalogeno aromatic compound and the sulfidating agent and, if necessary, a polyhalogeno aromatic compound are subjected to reaction in the organic polar solvent while controlling the water content in the reaction system to be in the range of 0.02 to 0.5 mol, relative to 1 mol of the organic polar solvent, producing a polyarylene sulfide resin (see JPH07-228699A), or the method in which a dihalogeno aromatic compound and, if necessary, a polyhalogeno aromatic compound or another copolymerizable component, and an alkali metal hydrogensulfide and an organic acid alkali metal salt are subjected to reaction in the presence of an alkali metal sulfide in a solid form and an aprotic polar organic solvent while controlling the organic acid alkali metal salt to be in the range of 0.01 to 0.9 mol, relative to 1 mol of the sulfur source, and the water content in the reaction system to be in the range of 0.02 mol, relative to 1 mol of the aprotic polar organic solvent (see WO2010/058713A pamphlet). Specific examples of dihalogeno aromatic compounds include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and the above compounds each having in the aromatic ring thereof an alkyl group having 1 to 18 carbon atoms as a nuclear substituent, and examples of polyhalogeno aromatic compounds include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. Further, the halogen atom contained in the above-mentioned compounds is desirably a chlorine atom or a bromine atom.

With respect to the after-treatment method for the reaction mixture containing the polyarylene sulfide resin obtained by the above-mentioned polymerization method, there is no particular limitation, but, for example, as examples of the step of cleaning for the by-product contained in the polymerization reaction product (unavoidable component derived from the polymerization reaction for the polyarylene sulfide resin) after the polymerization of the polyarylene sulfide resin (hereinafter, frequently referred to simply as "cleaning step"), there can be mentioned methods shown in the following (after-treatment method 1) to (after-treatment method 6). Specifically, there can be mentioned (after-treatment method 1) in which, after completion of the polymerization reaction, the solvent is first distilled off from the reaction mixture as such, or the reaction mixture after an acid or a base is added thereto, under a reduced pressure or under atmospheric pressure, and then the solid material obtained after distilling off the solvent is washed with a solvent, such as water, the reaction solvent (or an organic solvent having an equivalent solubility for a low-molecular weight polymer), acetone, methyl ethyl ketone, or an alcohol, once or two or more times, and further subjected to neutralization, washing with water, and filtration, and, if necessary, a dispersing medium is added to the solid material to obtain a dispersion; (after-treatment method 2) in which, after completion of the polymerization reaction, a solvent (a solvent which is soluble in the polymerization solvent used, and which is a poor solvent with respect to at least the polyarylene sulfide), such as water, acetone, methyl ethyl ketone, an alcohol, an ether, a halogenated hydrocarbon, an aromatic hydrocarbon, or an aliphatic hydrocarbon, is added as a precipitant to the reaction mixture to cause the products in the solid state including the polyarylene sulfide and an inorganic salt to precipitate, and the resultant precipitates are subjected to washing and filtration, and, if necessary, a dispersing medium is added to the products to obtain a dispersion; (after-treatment method 3) in which, after completion of the polymerization reaction, the reaction solvent (or an organic solvent

having an equivalent solubility for a low-molecular weight polymer) is added to the reaction mixture and the resultant mixture is stirred, and then subjected to filtration to remove the low-molecular weight polymer, and then washed with a solvent, such as water, acetone, methyl ethyl ketone, or an alcohol, once or two or more times, and then subjected to neutralization, washing with water, and filtration, and, if necessary, a dispersing medium is added to the resultant solids to obtain a dispersion; (after-treatment method 4) in which, after completion of the polymerization reaction, water is added to the reaction mixture and the reaction mixture is washed with water and subjected to filtration and, if necessary, during the washing with water, an acid is added to the reaction mixture for an acid treatment, and further, if necessary, a dispersing medium is added to the mixture to obtain a dispersion; (after-treatment method 5) in which, after completion of the polymerization reaction, the reaction mixture is subjected to filtration and, if necessary, washed with the reaction solvent once or two or more times, and further subjected to washing with water and filtration, and, if necessary, a dispersing medium is added to the solids to obtain a dispersion; and (after-treatment method 6) in which, after completion of the polymerization reaction, the reaction mixture is subjected to desolvation to obtain a slurry product containing crude polyarylene sulfide, and further the slurry product containing crude polyarylene sulfide is allowed to be in contact with water and an oxygen atom-containing solvent having 1 to 3 carbon atoms to obtain porous particles of the crude polyarylene sulfide, and the obtained porous particles are washed with carbonated water and subjected to filtration, and, if necessary, a dispersing medium is added to the porous particles to obtain a dispersion. In the above-mentioned after-treatments, a method can be conducted in which the product is finally dried to obtain a powder, but, from the viewpoint of excellent performance at the start of the use, it is preferred that the polyarylene sulfide resin particles are not dried but are in such a state that the surface of the particles are wet with the liquid or dispersion used in washing in the above-mentioned methods. Particularly, the adsorbent preferably contains water used in the cleaning step in the form of a hydrated material from the viewpoint of excellent performance at the start of the use and excellent productivity.

In the after-treatment method mentioned in the item (6) above, with respect to the oxygen atom-containing solvent having 1 to 3 carbon atoms, for example, there can be mentioned at least one member selected from the group consisting of an alcohol and a ketone. Examples of alcohols (also called alcohol-based solvents or alcohol solvents) include alcohols having 10 carbon atoms or less, such as methyl alcohol, ethyl alcohol, n-propoyl alcohol, isopropoyl alcohol, n-butyl alcohol, isobutyl alcohol, t-butyl alcohol, ethylene glycol, propylene glycol, trimethylolpropane, and benzyl alcohol; alcohols having 10 carbon atoms or less and having an ether linkage, such as 2-methoxyethyl alcohol, 2-ethoxyethyl alcohol, 1-methoxy-2-propoyl alcohol, 1-ethoxy-2-propoyl alcohol, 3-methoxy-1-butyl alcohol, and 2-isopropoxyethyl alcohol; alcohols having 10 carbon atoms or less and having a ketone group, such as 3-hydroxy-2-butanone; and alcohols having 10 carbon atoms or less and having an ester group, such as methyl hydroxyisobutyrate. Further, examples of ketones (also called ketone-based solvents or ketone solvents) include acetone, methyl ethyl ketone, cyclohexanone, $\gamma$-butyrolactone, and N-methylpyrrolidinone. In the invention, a monohydric alcohol having 10 carbon atoms or less is preferably used because the residual carboxyalkylamino group-containing compound can be efficiently removed, and a monohydric alcohol having 3 carbon atoms or less is further preferred.

In the invention, when the PAS resin particles have suffered aggregation in the liquid, the particles can be dispersed by applying mechanical shearing force from the outside of the particles. As examples of methods for applying mechanical shearing force from the outside of the particles, there can be mentioned a method in which the particles are stirred using a stirring rod or an agitating blade, a method using sonic energy by irradiation with ultrasonic waves or low-frequency vibration, a method in which the particles are stirred and mixed or dispersed using a micromixer, and a method in which the particles are passed through a classification means, such as a mesh, to suppress aggregation. The method using sonic energy enables a non-contact treatment, and therefore can be preferably used when the adsorbent is immobilized.

When irradiation with ultrasonic waves is conducted, with respect to the energy for irradiation, there is no particular limitation as long as the energy enables pulverization of the above-mentioned porous material, but the energy is generally in the range of $1.0 \times 10^5$ to $1.0 \times 10^{10}$ [W/m$^3$], preferably $1.0 \times 10^7$ to $1.0 \times 10^9$ [W/m$^3$]. When irradiation with ultrasonic waves is conducted, irradiation with ultrasonic waves having a constant frequency may be conducted, or irradiation with ultrasonic waves having different frequencies may be successively conducted, and, in this case, the frequency of ultrasonic waves can be increased from a lower frequency to a higher frequency, or conversely, the frequency can be decreased from a higher frequency to a lower frequency, or the increase and decrease of the frequency can be alternately conducted. The irradiation with ultrasonic waves may be conducted once or two or more times. When irradiation with ultrasonic waves is conducted two or more times, the number of irradiation may be any number until dispersion is completed, but the number is preferably 2 to 100, more preferably 2 to 10. As an apparatus for such ultrasonic wave irradiation, a known apparatus can be used, and examples include an ultrasonic homogenizer and an ultrasonic cleaner.

With respect to the melt viscosity of the polyarylene sulfide resin constituting the polyarylene sulfide resin particles used in the invention, there is no particular limitation, but the melt viscosity (V6) as measured at 300°C is in the range of preferably 1 [Pa•s] or more, more preferably 3 [Pa•s] or more, further preferably 5 [Pa•s] or more, and preferably 800 [Pa•s] or less, more preferably 500 [Pa•s] or less, further preferably 200 [Pa•s] or less.

With respect to the non-Newtonian index of the polyarylene sulfide resin constituting the polyarylene sulfide

resin particles used in the invention, there is no particular limitation, but the non-Newtonian index is in the range of preferably 0.90 or more, more preferably 0.95 or more, and preferably 1.25 or less, more preferably 1.20 or less.

The melt viscosity (V6) as measured at 300°C indicates a melt viscosity which is measured after being maintained for 6 minutes using a flow tester at a temperature of 300°C under a load of 1.96 MPa, and using an orifice such that the ratio of an orifice length and an orifice diameter, i.e., orifice length/orifice diameter ratio is 10/1. Further, the non-Newtonian index (N value) is a value determined by measuring a shear rate and a shear stress using Capilograph under conditions at 300°C such that the ratio of an orifice length (L) and an orifice diameter (D), LID = 40, and making a calculation using the following formula:

[Math. 1]

$$SR = K \cdot SS^N$$

wherein SR represents a shear rate (second$^{-1}$), SS represents a shear stress (dyne/cm$^2$), and K represents a constant.

The N value which is close to 1 indicates that the polyarylene sulfide has a nearly linear structure, and the N value which is higher indicates that the polyarylene sulfide has a crosslinked structure.

With respect to the particle diameter of the particles composed of a polyarylene sulfide resin in the invention, there is no particular limitation, but the average particle diameter measured by SEM observation is in the range of preferably 1 [μm] or more, more preferably 5 [μm] or more, further preferably 20 [μm] or more, and preferably 500 [μm] or less, more preferably 400 [μm] or less, further preferably 300 [μm] or less.

In the adsorbent used in the invention, it is preferred that, as the external additive (component present outside of the polyarylene sulfide resin particles, mainly the component present in the interface between the polyarylene sulfide resin particles and the liquid) component for the adsorbent, components other than the polyarylene sulfide resin particles (excluding unavoidable components derived from the polymerization reaction for the polyarylene sulfide resin and water), for example, additives known and commonly used, such as a surfactant (dispersant), a coloring agent, an antistatic agent, an antioxidant, a heat stabilizer, an ultraviolet light stabilizer, an ultraviolet light absorber, a foaming agent, a flame retardant, a flame retardant auxiliary, a rust preventive agent, a release agent, and a coupling agent, are not present. The expression that the components other than the polyarylene sulfide resin particles are not present as the components constituting the adsorbent specifically indicates that the content of the polyarylene sulfide resin particles in the adsorbent, excluding the unavoidable components and water, is in the range of preferably 95% by mass or more, more preferably 99% by mass or more, further preferably 99.9% by mass or more. With respect to the upper limit of the content, there is no particular limitation, but the content is in the range of 100% by mass or less.

It is preferred that the polyarylene sulfide resin particles have the surface wet with water, and accordingly, the adsorbent of the invention is preferably one which contains water (hydrated material). With respect to the amount of the water in the adsorbent, there is no particular limitation, but, from the viewpoint of reduction of the transport cost, the amount of the water, relative to 100 parts by mass of the adsorbent, is preferably 500 parts by mass or less, more preferably 250 parts by mass or less, further preferably 150 parts by mass or less. With respect to the lower limit of the amount of the water, there is no particular limitation, and the amount of the water may be 0 part by mass (dried adsorbent), but, from the viewpoint of excellent performance at the start of the use, the amount of the water is preferably 1 part by mass or more, further, more preferably 10 parts by mass or more.

Further, in the polyarylene sulfide resin particles, it is preferred that, as the internal additive (component present inside of the polyarylene sulfide resin particles due to melt-kneading) component constituting the particles, components other than the polyarylene sulfide resin (excluding unavoidable components derived from the polymerization reaction for the polyarylene sulfide resin), for example, additives known and commonly used, such as a surfactant (dispersant), a coloring agent, an antistatic agent, an antioxidant, a heat stabilizer, an ultraviolet light stabilizer, an ultraviolet light absorber, a foaming agent, a flame retardant, a flame retardant auxiliary, a rust preventive agent, a release agent, and a coupling agent, are not present. The expression that the components other than the polyarylene sulfide resin are not present as the components constituting the particles specifically indicates that the content of the polyarylene sulfide resin in the polyarylene sulfide resin particles, excluding the unavoidable components, is in the range of preferably 95% by mass or more, more preferably 99% by mass or more, further preferably 99.9% by mass or more. With respect to the upper limit of the content, there is no particular limitation, but the content is in the range of 100% by mass or less.

The unavoidable components derived from the polymerization reaction for the polyarylene sulfide resin include unreacted raw materials used in the polymerization reaction and a by-product, especially, metal atom-containing components, such as a sulfidating agent (an alkali metal sulfide or an alkali metal hydrogensulfide), an alkali metal halide, and a carboxyalkylamino group-containing compound represented by the following general formula (1):

[Chem. 5]

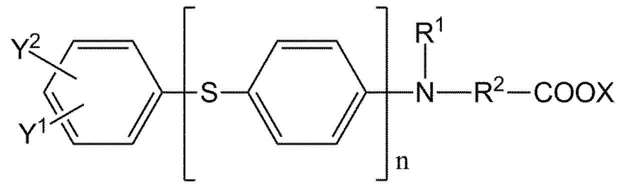

(1)

wherein n is 0 to 2, $Y^1$ represents a halogen atom, $Y^2$ represents a hydrogen atom or a halogen atom, $R^1$ represents a hydrogen atom, an alkyl group having 1 to 3 carbon atoms, or a cyclohexyl group, $R^2$ represents an alkylene group having 3 to 5 carbon atoms, and X represents an alkali metal atom.

EXAMPLES

Hereinbelow, the present invention will be described in more detail with reference to the following Examples, which are merely examples and should not be construed as limiting the scope of the invention.

(Measurement of a melt viscosity of the polyphenylene sulfide resin)

Using a flow tester, CFT-500D, manufactured by Shimadzu Corporation, the polyphenylene sulfide resin produced in the reference example was maintained at 300°C, a load: $1.96 \times 10^6$ Pa, and L/D = 10 (mm)/1 (mm) for 6 minutes, and then a melt viscosity was measured.

[Synthesis Example 1]

(polymerization step for polyarylene sulfide)

Into a 150 L autoclave having an agitating blade and being equipped with a pressure gauge, a thermometer, a condenser, a decanter, and a rectifying column were charged 33.222 kg (226 mol) of p-dichlorobenzene (hereinafter, abbreviated to "DCB"), 2.280 kg (23 mol) of N-methyl-2-pyrrolidone (hereinafter, abbreviated to "NMP"), 27.300 kg (230 mol) of 47.23% by mass sodium hydrogensulfide, and 18.533 kg (228 mol) of 49.21% by mass sodium hydroxide, and, while stirring, the temperature of the resultant mixture was increased to 173°C over 5 hours in a nitrogen gas atmosphere so that 27.3 kg of water was distilled off, and then the autoclave was closed. The DCB distilled due to azeotropic distillation caused during the dehydration was separated by the decanter and instantly returned to the autoclave, and, after completion of the dehydration, the inside of the autoclave was in a state such that an anhydrous sodium sulfide composition was dispersed in DCB. Further, the temperature in the autoclave was reduced to 160°C, and 47.492 kg (479 mol) of NMP was charged and the temperature was increased to 185°C. At a point in time when the pressure reached 0.00 MPa, the valve to which the rectifying column was connected was opened, and the temperature in the autoclave was increased to 200°C over one hour. In this instance, cooling and the degree of opening of the valve were controlled so that the rectifying column outlet temperature became 110°C or lower. The mixed vapor of distilled DCB and water was condensed by the condenser and separated by the decanter, and the DCB was returned to the autoclave. The amount of the water distilled was 179 g. Then, the temperature in the autoclave was increased from 200°C to 230°C over 3 hours, and the resultant mixture was stirred for one hour, and then the temperature was increased to 250°C and the mixture was stirred for one hour, and, after completion of the reaction, the temperature in the autoclave was reduced from 250°C to 235°C, and, after the temperature reached that temperature, the bottom valve of the autoclave was opened and the resultant mixture as in the reduced pressure state was subjected to flash to a 150-litter vacuum stirring dryer having an agitating blade (desolvating machine jacket temperature: 120 degrees) to withdraw NMP, and the resultant product was cooled to room temperature and sampled, and, as a result, it was found that a PPS mixture having a nonvolatile content of 55% was obtained.

(Purification step for the polyarylene sulfide resin)

400 g of the PPS mixture obtained in Synthesis Example 1 and 317 g of methanol were placed in a flask and mixed by stirring at 40°C for 30 minutes, and the resultant slurry was subjected to filtration under reduced pressure using a Kiriyama Rohto (Kiriyama funnel), and the filter cake was hardened by suction, and further 634 g of methanol was poured portion by portion onto the cake for filtration. Further, the resultant filter cake was transferred to a beaker and

ground into a powder form using a spatula, and 634 g of water at 70°C was poured into the beaker, and the resultant mixture was stirred for 30 minutes. The resultant slurry was subjected to filtration under reduced pressure using a Kiriyama funnel, and the filter cake was hardened by suction, and further 845 g of water at 70°C was poured portion by portion onto the cake for filtration. The cake was transferred to a beaker, and 636 g of carbonated water was poured into the beaker, and the resultant mixture was stirred for one hour. The resultant slurry was subjected to filtration under reduced pressure using a Kiriyama funnel, and the filter cake was hardened by suction, and further 848 g of carbonated water was poured portion by portion onto the cake for filtration, obtaining a wet cake. The wet cake had a water content of 45 wt%. The PPS resin particles in the state of being a wet cake are referred to as "PPS resin particles (1)".

[Synthesis Example 2]

The "PPS resin particles (1)" obtained in the same manner as in Synthesis Example 1 were dried in a vacuum at 60°C for 8 hours. The PPS resin particles in the state of being dried are referred to as "PPS resin particles (2)".

[Synthesis Example 3]

400 g of the "PPS mixture" obtained in the same manner as in Synthesis Example 1 was dried in a vacuum at 150°C for 4 hours to completely remove NMP, obtaining a PPS crude product. The obtained PPS crude product and 636 g of water at 70°C were placed in a flask and mixed by stirring at 70°C for 30 minutes, and the resultant slurry was subjected to filtration under reduced pressure using a Kiriyama funnel, and the filter cake was hardened by suction, and further 636 g of water at 70°C was poured portion by portion onto the cake for filtration. The obtained filter cake and 422 g of water were placed in an autoclave and stirred at 200°C for 30 minutes, and the resultant slurry was subjected to filtration under reduced pressure using a Kiriyama funnel, and the filter cake was hardened by suction, and further 636 g of water at 70°C was poured portion by portion onto the cake for filtration. The resultant filter cake was dried in a vacuum at 60°C for 8 hours. The PPS resin particles in the state of being a filter cake are referred to as "PPS resin particles (3)".

(Examples 1 to 9)

To 10 cc of a 0.01 N aqueous hydrochloric acid solution (pH = 2.0) having dissolved therein 1 mmol of the separation object substance shown in Table 1 or 2 was added 0.05 g of the PPS resin particles (1), (2), or (3) shown in Table 1 or 2 as an adsorbent, and the resultant mixture was subjected to vibration (liquid temperature: 30°C; 120 rpm; 3 hours) to permit the adsorbent to adsorb the separation object substance. Then, the mixture was subjected to filtration to obtain the aqueous solution and the adsorbent separately. A concentration of the separation object substance in the filtrate obtained by filtration was quantitatively determined by an ICP emission spectrometry analyzer ("Optima 4300DV", manufactured by Perkin Elmer Japan Co., Ltd.), and a difference in the concentration between the aqueous solution charged and the filtrate was used as an adsorption (shown in Tables 1 and 2).

[Table 1]

| | **Example 1** | **Example 2** | **Example 3** | **Example 4** | **Example 5** |
|---|---|---|---|---|---|
| **Separation object substance** | **Au(III)** | **Pt(IV)** | **Pd(III)** | **Fe(III)** | **Ni(II)** |
| **Adsorbent** | **(1)** | **(1)** | **(1)** | **(1)** | **(1)** |
| **Adsorption [mg/g]** | **35** | **31** | **21** | **1** | **1** |

[Table 2]

| | **Example 6** | **Example 7** | **Example 8** | **Example 9** |
|---|---|---|---|---|
| **Separation object substance** | **Ag(I)** | **Co(II)** | **Pt(IV)** | **Pt(IV)** |
| **Adsorbent** | **(1)** | **(1)** | **(2)** | **(3)** |
| **Adsorption [mg/g]** | **4** | **1** | **25** | **18** |

(Examples 10 to 13)

To 10 cc of an aqueous solution containing the separation object substance shown in Table 3 in an amount of 5 wt% was added 0.5 g of the PPS resin particles (1), (2), or (3) shown in Table 1 or 2 as an adsorbent, and the resultant mixture was subjected to vibration (30°C; 120 rpm; 3 hours) to permit the adsorbent to adsorb the separation object substance. Then, the mixture was subjected to filtration to obtain the aqueous solution and the adsorbent separately. A concentration of the separation object substance in the filtrate obtained by filtration was determined by gas chromatography, and a difference in the concentration between the aqueous solution charged and the filtrate was used as an adsorption (shown in Table 3).

[Table 3]

| | **Example 10** | **Example 11** | **Example 12** | **Example 13** |
|---|---|---|---|---|
| **Separation object substance** | **Methanol** | **Ethanol** | **Methanol** | **Methanol** |
| **Adsorbent** | **(1)** | **(1)** | **(2)** | **(3)** |
| **Adsorption [mg/g]** | **350** | **300** | **290** | **170** |

By using polyarylene sulfide resin particles as an adsorbent, a metal or a protic organic solvent was able to be separated from an aqueous solution containing the metal or protic organic solvent.

## Claims

1. A method for separating a separation object substance and a liquid using an adsorbent from the liquid containing the separation object substance,

   the method comprising the step of contacting a liquid containing a separation object substance and an adsorbent with each other to permit the adsorbent to selectively adsorb the separation object substance contained in the liquid, removing the separation object substance from the liquid,
   wherein the adsorbent is polyarylene sulfide resin particles, and
   wherein the liquid contains water.

2. The separation method according to claim 1, wherein contacting the liquid containing the separation object substance and the adsorbent is conducted in the absence of a surfactant.

3. The separation method according to claim 1 or 2, wherein the adsorbent is a hydrated material.

4. The separation method according to any one of claims 1 to 3, wherein the separation object substance is a compound containing a metal atom (excluding the metal atom which is the unreacted raw material or by-product of the polymerization reaction for the polyarylene sulfide resin).

5. The separation method according to any one of claims 1 to 4, wherein the separation object substance is a transition metal atom.

6. The separation method according to any one of claims 1 to 4, wherein the separation object substance is a protic organic solvent, and the liquid is water.

7. A method for producing a liquid, having the step of separating a separation object substance and a liquid using an adsorbent from the liquid containing the separation object substance, producing a liquid having the separation object substance reduced,

   wherein the method comprises the step of contacting a liquid containing a separation object substance and an adsorbent with each other to permit the adsorbent to selectively adsorb the separation object substance contained in the liquid, removing the separation object substance from the liquid,
   wherein the adsorbent is polyarylene sulfide resin particles, and
   wherein the liquid contains water.

8. An adsorbent which is for use in adsorbing a separation object substance from a liquid containing the separation object substance,
wherein the adsorbent comprises polyarylene sulfide resin particles and water in the absence of a surfactant.

## INTERNATIONAL SEARCH REPORT

International application No.
**PCT/JP2021/016239**

**A. CLASSIFICATION OF SUBJECT MATTER**

***B01D 15/00***(2006.01)i; ***B01D 15/02***(2006.01)i; ***B01J 20/26***(2006.01)i
FI: B01D15/00 N; B01J20/26 E; B01J20/26 J; B01D15/00 M; B01D15/02 102

According to International Patent Classification (IPC) or to both national classification and IPC

**B. FIELDS SEARCHED**

Minimum documentation searched (classification system followed by classification symbols)

B01D15/00; B01D15/02; B01J20/26

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 6-327970 A (TORAY INDUSTRIES INCORPORATED) 29 November 1994 (1994-11-29)<br>claims 1-2, paragraphs [0007], [0019], [0024], [0025] | 1-3, 7-8<br>4-6 |
| X<br>A | JP 8-168672 A (HOECHST AG) 02 July 1996 (1996-07-02)<br>claims 1-10, paragraphs [0005], [0007]-[0011] | 1-3, 7-8<br>4-6 |
| X | ZHANG, Chao-Zhi et al., An efficient and health-friendly adsorbent N-[4-morpholinecarboximidamidoyl]carboximidamidoylmethylated polyphenylene sulfide for removing heavy metal ions from water, Journal of Molecular Liquids, 2019, vol. 296, p. 111860<br>particularly, abstract | 1-5, 7-8 |
| A | JP 2017-110222 A (DAINIPPON INK & CHEMICALS) 22 June 2017 (2017-06-22) | 1-8 |
| A | CN 105860077 A (ZHENGZHOU UNIVERSITY) 17 August 2016 (2016-08-17) | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 June 2021** | **06 July 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/016239**

| Patent document cited in search report | Publication date (day/month/year) | Patent family member(s) | Publication date (day/month/year) |
|---|---|---|---|
| JP 6-327970 A | 29 November 1994 | (Family: none) | |
| JP 8-168672 A | 02 July 1996 | EP 697238 A2<br>DE 4428727 A1 | |
| JP 2017-110222 A | 22 June 2017 | (Family: none) | |
| CN 105860077 A | 17 August 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10273594 A
- JP 2017061607 A
- JP H07228699 A
- WO 2010058713 A